(19) Europäisches Patentamt
European Patent Office
Office européen des brevets

(11) **EP 2 818 693 A1**

(12) **EUROPEAN PATENT APPLICATION**

(43) Date of publication:
**31.12.2014 Bulletin 2015/01**

(51) Int Cl.:
*F03D 7/02* (2006.01)       *F03D 7/04* (2006.01)
*H02J 3/38* (2006.01)

(21) Application number: **13190989.7**

(22) Date of filing: **31.10.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **24.06.2013 KR 20130072685**

(71) Applicant: **Industrial Cooperation Foundation Chonbuk National University**
**Jeonju-si (KR)**

(72) Inventors:
• **Kang, Yong Cheol**
  **829-4 Jeonju-si (KR)**

• **Kim, Doo Yeon**
  **Daejeon 305-751 (KR)**
• **Lee, Jin Shik**
  **Jeonju-si (KR)**
• **Kim, Yeon Hee**
  **Jeonju-si (KR)**
• **Kim, Jin Ho**
  **Jeonju-si (KR)**

(74) Representative: **Regimbeau**
**20, rue de Chazelles**
**75847 Paris Cedex 17 (FR)**

(54) **Method of controlling inertia in wind farm**

(57)    The present invention relates to a method of controlling a wind farm. A method of controlling inertia in a wind farm includes obtaining information about the frequency of an electrical grid which has been received from the electrical grid or calculated using the voltage of the wind turbine, receiving information about the rotor speed of the wind turbine, calculating the kinetic energy of the wind turbine using the information about the rotor speed, calculating an individual droop coefficient of the wind turbine using the calculated kinetic energy, and controlling the wind turbine using the calculated droop coefficient.

FIG. 2

**Description**

CROSS REFERENCE TO RELATED APPLICATION

The present application claims the benefit of Korean Patent Application No. 10-2013-0072685 filed in the Korean Intellectual Property Office on June 24, 2013, the entire contents of which are incorporated herein by reference.

BACKGROUND OF THE INVENTION

1. Technical Field

The present invention relates to a method of controlling a wind farm and, more particularly, to a method of controlling a wind turbine in order to rapidly supplement the amount of insufficient active power in an electrical grid and recover the state of an electrical grid to a normal operation state when a disturbance, such as the falling-off of a generator, occurs in the electrical grid.

2. Description of the Related Art

When a disturbance, such as the falling-off of a generator or an increase in a load, occurs in an electrical grid, the frequency of the electrical grid is decreased because electrical energy falls short. For example, in Korea, when the frequency reaches 59 Hz, an under frequency load shedding (UFLS) relay operates to cut off 6% of the total load in order to prevent the cascaded generator tripping. When the frequency is decreased by 0.2 Hz below 59Hz, additional 6% of the load is shed. Accordingly, the frequency nadir after a disturbance becomes an important factor that determines system reliability, and the frequency of the electrical grid should not be decreased below 59 Hz in order to prevent load shedding.

A variable-speed wind turbine that is now mainly used for wind power generation performs the Maximum Power Point Tracking (MPPT) control by controlling the speed of a rotor in order to produce maximum output according to the velocity of the wind. The MPPT control is performed irrespective of a change of the frequency of an electrical grid. If a wind power penetration is high, the inertia of the electrical grid is decreased. As a result, when a disturbance occurs in the electrical grid, the frequency is further decreased. In order to prevent the severe decrease, a frequency control function is necessary for a wind turbine.

There have been proposed many methods in which a wind turbine can contribute to the recovery of the frequency of an electrical grid. There has also been proposed a method of adding a reference value, generated from a rate of change of frequency (ROCOF) loop of an electrical grid, to a reference value of output for performing MPPT control of a wind turbine. Such a method can contribute to preventing a decrease of the frequency of the electrical grid because energy stored in the rotor of a wind turbine can be temporarily released after a disturbance occurs. In such a method, the degree of contribution to the recovery of the frequency is great because the ROCOF has a high value immediately after a disturbance occurs. However, the degree of contribution to the recovery of the frequency is decreased because the ROCOF is gradually decreased over time.

Meanwhile, in most cases, after a disturbance occurs, the amount of active power generated by controlling inertia and the droop control of operating synchronous generators is more than the capacity of tripped generators. Accordingly, the frequency of the electrical grid rebounds, and a sign of the ROCOF is reversed. Therefore, such a method contributes to the recovery of a frequency only until the frequency rebounds. The degree of contribution to the recovery of the frequency becomes negative because the output of a wind farm is decreased due to the reversed sign of the ROCOF after the frequency rebounds.

[Prior Art Document]
[Patent Document]
(Patent Document 1) Korean Patent Laid-Open Publication No. 2008-0077161 (August 21, 2008)

SUMMARY OF THE INVENTION

Accordingly, the present invention has been made keeping in mind the above problems occurring in the conventional methods, and an object of the present invention is to rapidly recover a frequency and supply more active power to an electrical grid after a disturbance occurs.

To this end, a method of controlling inertia in a wind farm in accordance with an embodiment of the present invention includes obtaining information about the frequency of an electrical grid which has been received from the electrical grid or calculated using the voltage of the wind turbine, receiving information about the rotor speed of the wind turbine, calculating the kinetic energy of the wind turbine using the information about the rotor speed, calculating an individual droop coefficient of the wind turbine using the calculated kinetic energy, and controlling the wind turbine using the calculated droop coefficient.

Calculating the droop coefficient includes deriving the droop coefficient which is determined to have a positive correlation between the kinetic energy of the wind turbine and energy output from the wind turbine and the lowest limit of the droop coefficient is determined within a range in which the wind turbine should not be decreased below the lowest operating rotor speed.

A method of controlling inertia in a wind farm in accordance with another embodiment of the present invention includes obtaining information about the frequency of an electrical grid which has received from the electrical grid or calculated using the voltage of a wind turbine, calculating a rate of change of the frequency (ROCOF) and the maximum value of the ROCOF, and controlling the wind turbine in the state in which the maximum value of the ROCOF remains intact. Controlling the wind turbine may include controlling the wind turbine so that a reference value generated using the maximum value of the ROCOF is maintained when generating a valid electric power reference value of the wind turbine.

Furthermore, controlling the wind turbine may include controlling the wind turbine by reflecting a coefficient of the ROCOF loop of the electrical grid that varies depending on the kinetic energy of the wind turbine.

A method of controlling inertia in a wind farm in accordance with embodiment of the present invention includes receiving information about the rotor speed of the wind turbine, calculating the kinetic energy of the wind turbine using the information about the rotor speed, and calculating an individual droop coefficient of the wind turbine using the calculated kinetic energy, after receiving the information about the frequency in the aforementioned embodiment, wherein controlling the wind turbine may include controlling the wind turbine by using the calculated droop coefficient in the state in which the maximum value of the ROCOF is maintained.

BRIEF DESCRIPTION OF THE DRAWINGS

FIG. 1 is a flowchart illustrating a method of controlling inertia in a wind farm in accordance with an embodiment of the present invention;

FIG. 2 shows the method of controlling inertia, shown in the embodiment of FIG. 1, in a control loop form;

FIG. 3 is a diagram showing a model of the wind farm for simulating an embodiment of the present invention;

FIG. 4 shows a graph that summarizes a droop coefficient of a wind turbine according to the speed of a rotor;

FIGS. 5A to 5D are graphs showing the simulation results of the embodiment of FIG. 1;

FIG. 6 is a flowchart illustrating a method of controlling inertia in a wind farm in accordance with another embodiment of the present invention;

FIG. 7 shows the method of controlling inertia in accordance with the embodiment of FIG. 6 in a control loop form;

FIGS. 8A to 8D are graphs showing the simulation results of the embodiment of FIG. 6;

FIG. 9 is a flowchart illustrating a method of controlling inertia in a wind farm in accordance with yet another embodiment of the present invention;

FIG. 10 shows the method of controlling inertia in accordance with the embodiment of FIG. 9 in a control loop form; and

FIGS. 11A to 11D are graphs showing the simulation results of the embodiment of FIG. 9.

DETAILED DESCRIPTION

Prior to a detailed description of the present invention, a term 'wind farm' used in the present invention is a concept that includes one wind turbine or a plurality of wind turbines. That is, the term 'wind farm' is also used in relation to one wind turbine.

Accordingly, a term 'controlling a wind farm' should be interpreted as including both controlling a wind farm including a plurality of wind turbines and controlling one wind turbine. If a plurality of wind farms is present, controlling each wind farm also corresponds to 'controlling a wind farm' of the present invention. Meanwhile, the meaning 'voltage of a wind turbine' should be construed as including both the voltage of each wind turbine and the voltage of a wind farm including a plurality of wind turbines.

A method of controlling inertia in accordance with the present invention is unlimited applied to control of a wind turbine and control of a wind farm, and the scope of the method of controlling inertia is not limited.

Hereinafter, the present invention is described in detail with reference to the accompanying drawings.

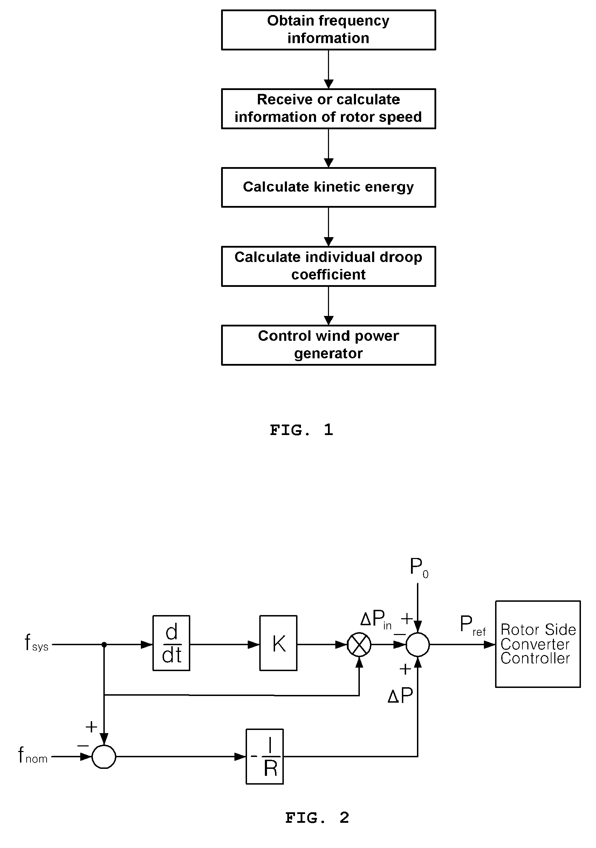

FIG. 1 is a flowchart illustrating a method of controlling inertia in a wind farm in accordance with an embodiment of the present invention.

The method of controlling inertia in a wind farm in accordance with the present invention includes obtaining information about the frequency of the electrical grid which has been received from the electrical grid or calculated using the voltage of the wind turbine, receiving information about the rotor speed of the wind turbine, calculating the kinetic energy of the wind turbine using the information about the rotor speed, calculating an individual droop coefficient of the wind turbine using the calculated kinetic energy, and controlling the wind turbine using the calculated droop coefficient.

The information about the frequency of the wind turbine can be obtained by a sensor included within the wind turbine, a wind farm controller for monitoring the wind turbine or the like. Meanwhile, in order to sense rotor speed of the wind turbine, the rotor speed can be checked through an additional sensor, the wind farm controller for monitoring the wind turbine.

The information about the rotor speed is received, the kinetic energy of the wind turbine is calculated based on the received information, and thus the kinetic energy released from the wind turbine is calculated.

The kinetic energy that can be released from the wind turbine when a disturbance occurs is calculated according to the following equation.

$$[\text{Equation 1}]$$

$$E_i = \frac{1}{2}J(\omega_i^2 - \omega_{min}^2)$$

$\omega_{min}$ is the minimum operating rotor speed of the wind turbine. As a result, in Equation 1, $E_i$ is the kinetic energy that can be released from an $i^{th}$ wind turbine.

A droop coefficient of each wind turbine is determined using the calculated kinetic energy from Equation 1. The droop is a control gain of the frequency deviation loop added to the wind turbine in order to perform the inertial control.

The droop coefficient of the wind turbine can be determined according to Equation 2 below.

[Equation 2]

$$\frac{\triangle \overline{P}}{\overline{f_{sys} - f_{nom}}} = -\frac{1}{R}$$

The left side of Equation 2 is obtained by dividing active power by a frequency, and a unit thereof is equal to that of the energy and can be represented as follows.

[Equation 3]

$$E_i \propto \frac{\triangle P_i}{f_{sys} - f_{nom}} = -\frac{1}{R_i}C, \text{ for } i = 1, \cdots, m$$

In Equation 3, m is the number of wind turbines within a wind farm. $E_i$ is the kinetic energy released to a load (i.e., the electrical grid) through frequency control (or controlling inertia), and C is a constant term generated by taking the unit into consideration in the left side of Equation 2.

As a result, energy that can be released from the wind turbine to the load is in inverse proportion to the droop coefficient. In other words, the product of the energy $E_i$ that can be released from the wind turbine to the load and the droop coefficient $R_i$ is always constant. This can be represented by Equation 4 below.

[Equation 4]

$$E_i R_i = E_{max} R_{min}$$

In Equation 4, $E_{max}$ is the maximum kinetic energy to be released from the wind turbine and can be derived by substituting the maximum operation speed $\omega_{max}$ into $\omega_i$ of Equation 1. The maximum operation speed $\omega_{max}$ of the wind turbine varies depending on the performance of the wind turbine ($\omega_{max}$=1.25 pu in simulations to be described later). $R_{min}$ is the minimum droop calculated in the wind turbine and may be determined in various manners. In accordance with an embodiment of the present invention, the minimum droop $R_{min}$ is determined within a range that should not be decreased below the minimum operating rotor speed of the wind turbine.

The minimum droop $R_{min}$ and the maximum kinetic energy $E_{max}$ are fixed values, and the energy $E_i$ is a calculated value. Accordingly, the droop coefficient $R_i$ of the wind turbine can be determined based on the minimum droop $R_{min}$, the maximum kinetic energy $E_{max}$, and the energy $E_i$. Equation 5 is obtained by summarizing Equation 4 in relation to the droop coefficient $R_i$.

[Equation 5]

$$R_i = R_{min} \times \frac{E_{max}}{E_i}$$

As a result, calculating the droop coefficient includes deriving a droop coefficient which is determined to have a positive correlation between the kinetic energy of the wind turbine and energy output from the wind turbine.

FIG. 2 shows the method of controlling inertia, shown in the embodiment of FIG. 1, in a control loop form.

The bottom loop in FIG. 2 is a control loop using the droop coefficient with the received frequency information $f_{sys}$ and $f_{nom}$. This represents the embodiment of the present invention shown in FIG. 1. At the top of FIG. 2, $P_0$ is a reference value for performing the MPPT control of a variable-speed wind turbine or controlling valid active power of a wind turbine. A top loop, from among two control loops in FIG. 2, is a control loop using the ROCOF.

The simulation results of the embodiment of FIGS. 1 and 2 are compared with those of a conventional method.

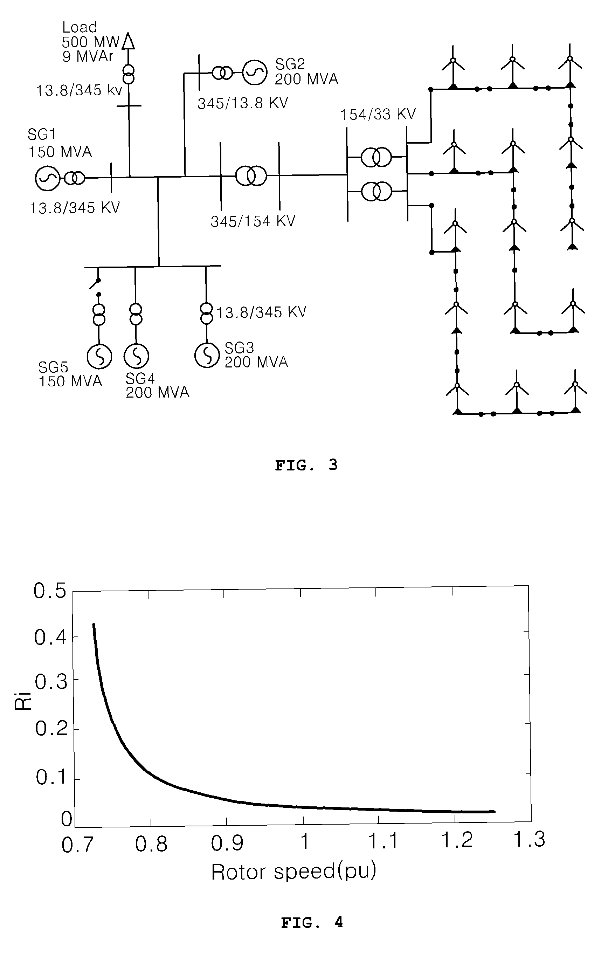

FIG. 3 is a diagram showing a model of a wind farm for simulating an embodiment of the present invention.

In order to verify performance in accordance with an embodiment of the present invention, a simulation system was constructed using an EMTP-RV simulator. FIG. 3 shows a simulation system including five synchronous generators (SGs) and a wind farm. The SGs include one 100 MVA unit, two 150 MVA units, and two 200 MVA units, and the 75 MVA wind farm includes 15 DFIGs of a 5 MVA unit. The total generation capacity is 900 MVA, and valid active power consumed by a load is 600 MW.

FIG. 4 shows a graph which shows a relationship between the drop coefficient of a wind turbine and the rotor speed. In FIG. 4, $R_{min}$ was assumed to be 1.5%. The droop coefficient $R_i$ is in inverse proportion to the energy $E_i$ that can be released from the wind turbine to the load. $E_i$ is proportional to the square of the rotor speed $\omega_i$ of the wind turbine. The speed $\omega_i$ and the droop coefficient $R_i$ have a relationship, such as that shown in the graph of FIG. 4.

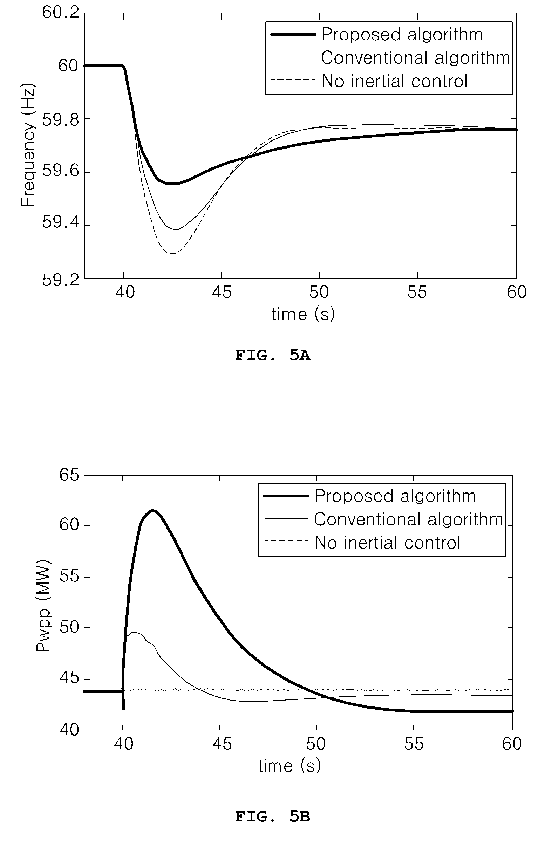

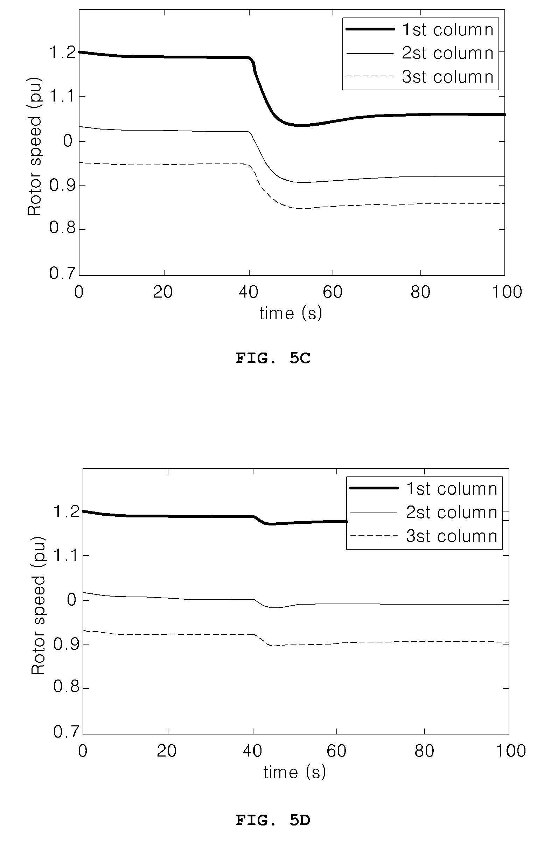

FIG. 5 is a graph showing simulation results according to FIG. 3.

In FIGS. 5A and 5B, a bold solid line indicates a characteristic in accordance with an embodiment of the present invention, a thin solid line indicates a characteristic in the case where only the ROCOF loop on FIG. 2 was applied, and a dotted line indicates a characteristic in the case where only MPPT control was performed, but additional frequency control was not performed.

FIG. 5A shows a change of the frequency over time, and FIG. 5B shows the output power of a wind farm over time. It can be seen that the frequency nadir in an embodiment of the present invention has risen (refer to FIG. 5A) as compared with a comparison group because more active power is supplied (refer to FIG. 5B) to the load when a disturbance occurs in an electrical grid.

FIG. 5C shows the rotor speed over time in accordance with an embodiment of the present invention, and FIG. 5D shows the rotor speed over time when only the ROCOF loop on FIG. 2 was applied. In FIGS. 5C and 5D, a bold solid line indicates the rotor speed of the wind turbines disposed in a first column that is close to the grid of FIG. 3, a solid line indicates the rotor speed of wind turbines disposed in a second column, and a dotted line indicates the rotor speed of wind turbines disposed in a third column. The reason why the rotor speed is different depending on the deployment of the wind turbine is that the wake effect is considered.

From FIGS. 5C and 5D, it can be seen that a decrement of the rotor speed in an embodiment of the present invention is increased as compared with the case where only the ROCOF loop on FIG. 2 was applied. In particular, it can be seen that a decrement in the first column in which the kinetic energy is the greatest (i.e., the rotor speed is fastest) is the largest.

As a result, in accordance with the present invention, the simulations show that the frequency of the system can be controlled so that the frequency is less decreased, that is, the wind turbine can be controlled so that it does not fall off, even though a disturbance occurs, and the frequency can return to a normal value within a short time by controlling inertia.

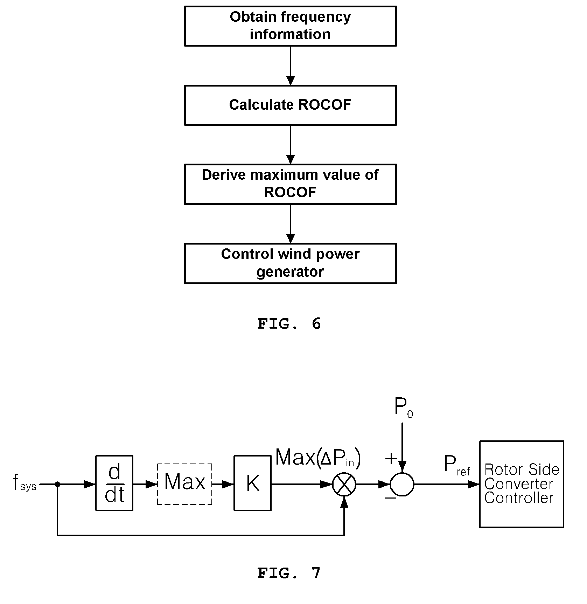

FIG. 6 is a flowchart illustrating a method of controlling inertia in a wind farm in accordance with another embodiment of the present invention.

The method of controlling inertia in a wind farm in accordance with another embodiment of the present invention includes obtaining information about the frequency of an electrical grid which has received from the electrical grid or calculated using the voltage of a wind turbine, calculating the ROCOF and the maximum value of the ROCOF, and controlling the wind turbine in the state in which the maximum value of the ROCOF remains intact.

FIG. 7 shows the method of controlling inertia in accordance with the embodiment of FIG. 6 in a control loop form. The method of the present embodiment has been improved from the aforementioned ROCOF method, and the method of the present embodiment includes calculating an ROCOF and generating the active power reference value based on the maximum value of the ROCOF. In FIG. 7, an auxiliary loop can produce constant output right after a disturbance by deriving a maximum value of the ROCOF through a step indicated by Max and maintaining the output of the wind turbine when the ROCOF is a maximum value (i.e., maintains the active power reference value). Accordingly, there are advantages in that the frequency nadir can be increased because the wind farm produces more active power, the frequency can return to a normal state within a short time because a point of time at which the frequency rebounds becomes fast, and the recovery of the frequency is faster than that of a conventional method even after the frequency rebounds.

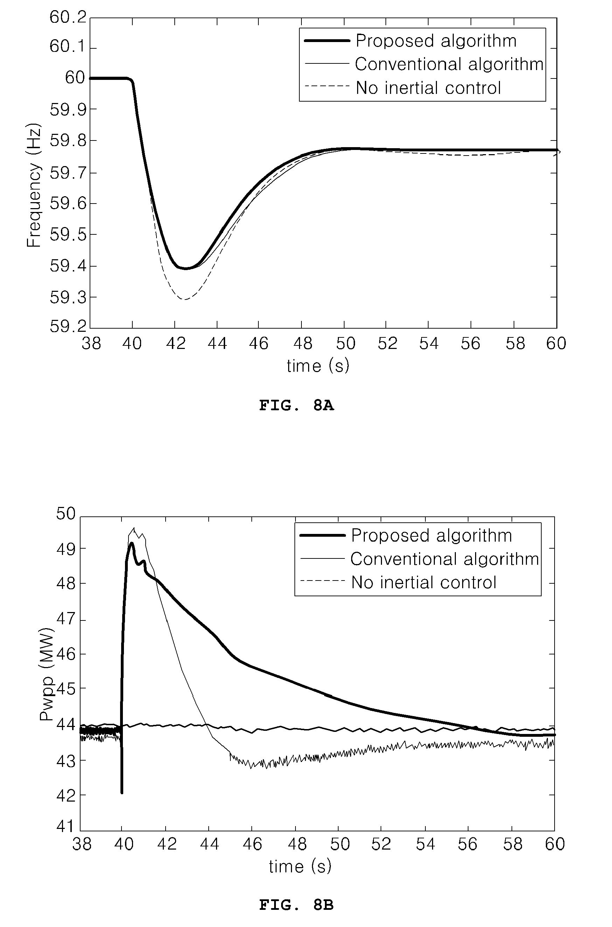

Hereinafter, the simulation results of the present embodiment are checked, and the characteristics of the present invention are described. The simulations were performed assuming the form shown in FIG. 3, and the simulation results are shown in FIGS. 8A to 8D.

In FIGS. 8A and 8B, a bold solid line indicates a characteristic in accordance with an embodiment of the present invention, a thin solid line indicates a characteristic in the case where an ROCOF varying over time was applied without deriving a maximum value of the ROCOF in FIG. 7 and the droop coefficient of each wind turbine was not calculated, and a dotted line indicates a characteristic in the case where only MPPT control was performed, but additional frequency control was not performed.

FIG. 8A shows a change of the frequency over time, and FIG. 8B shows the output power of the wind farm over time. It can be seen that the frequency nadir has more risen (refer to FIG. 8A) in the embodiment of the present invention than in the comparison group because more active power is supplied (refer to FIG. 8B) to the load immediately after the frequency is decreased. It can also be seen that the reference value of the active power (output) of the wind turbine is larger when a disturbance occurs in the electrical grid and the rotor speed is reduced because the kinetic energy of the wind turbine is used in order to supply more active power. That is, the wind turbine supplies more active power to the electrical grid immediately after the frequency is decreased in order to contribute to the recovery of the frequency. Accordingly, additional outage of the operating generators can be prevented, and the electrical grid can return to a normal state.

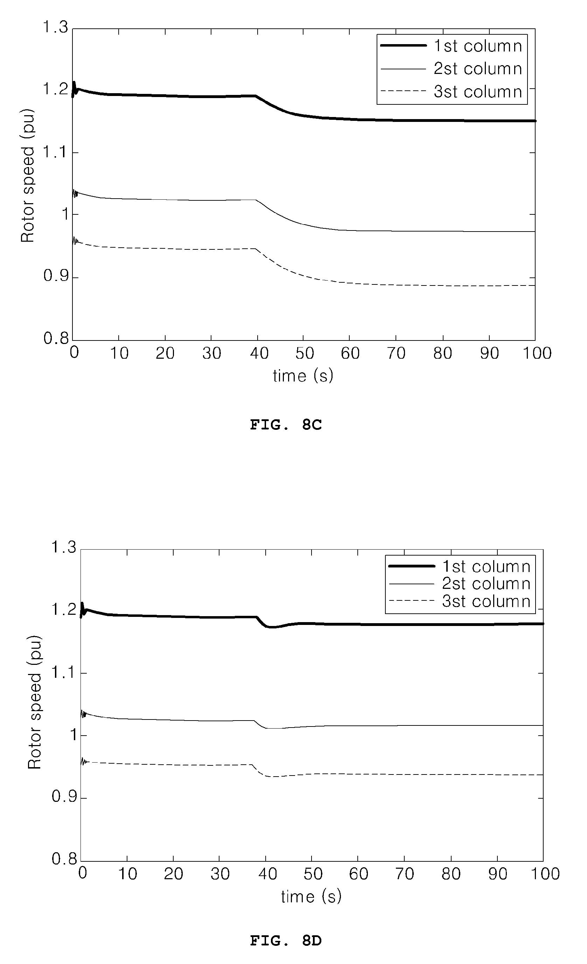

FIG. 8C shows the rotor speed over time in accordance with an embodiment of the present invention, and FIG. 8D shows the rotor speed over time when the ROCOF varying over time was applied without deriving the maximum value of the ROCOF in FIG. 7. In FIGS. 8C and 8D, a bold solid line indicates the rotor speed in a wind turbine disposed in a first column which is close to the system of FIG. 3, a solid line indicates the rotor speed in a wind turbine disposed in a second column, and a dotted line indicates the rotor speed in a wind turbine disposed in a third column. The reason why the rotor speed is different depending on the disposition of the wind turbine is that the wake effect is considered.

From FIGS. 8C and 8D, it can be seen that the decrement of the rotor speed in an embodiment of the present invention is increased as compared with the case where only the ROCOF varying over time was applied without deriving the maximum value of the ROCOF in FIG. 7. In particular, it can be seen that a decrement of the rotor speed in the first column in which the kinetic energy is the greatest (i.e., the rotor speed is fastest) is the largest.

As a result, in accordance with the present invention, the simulations show that the frequency of the system can be controlled so that the frequency is less decreased, that is, the wind turbine can be controlled so that it does not fall off, and the frequency can return to a normal value within a short time by controlling inertia.

In accordance with another embodiment of the present invention, a wind turbine can be controlled by considering a coefficient of the ROCOF loop that varies depending on the kinetic energy of the wind turbine. In the present embodiment, a K value on the control loop shown in FIG. 7 is changed, and a wind turbine having greater kinetic energy is controlled by allocating a higher K value to the wind turbine.

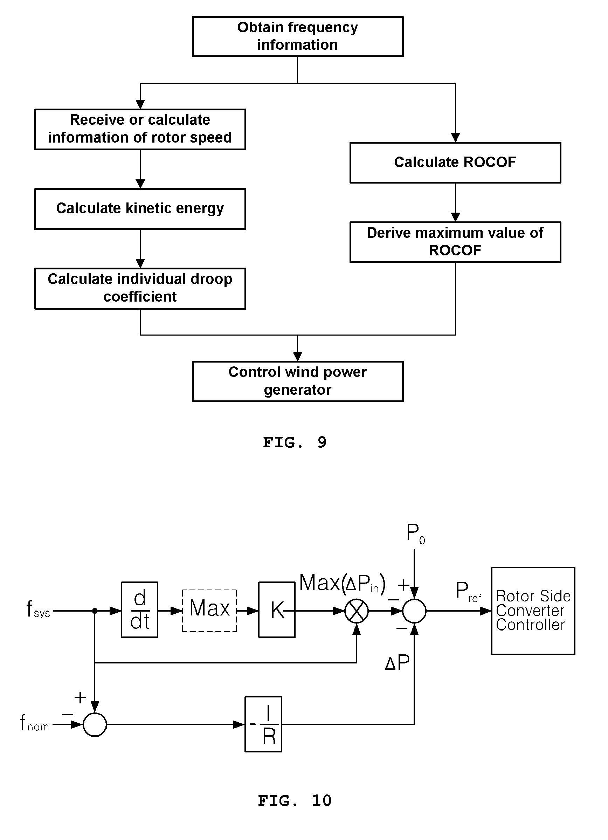

FIG. 9 is a flowchart illustrating a method of controlling inertia in a wind farm in accordance with yet another embodiment of the present invention.

The embodiment of FIG. 1 and the embodiment of FIG. 6 have been applied to the embodiment of FIG. 9. After receiving information about the frequency of the grid, (1) calculating a rate of change of the frequency per time and deriving a maximum value of the rate of change of the frequency and (2) receiving information about the rotor speed of the wind turbine, calculating the kinetic energy of the wind turbine using the information about the rotor speed, and calculating an individual droop coefficient of the wind turbine using the calculated kinetic energy are performed in parallel, and the wind turbine is controlled according to the executed steps. As a result, controlling the wind turbine is performed using the calculated droop coefficient in the state in which the maximum value of the ROCOF is maintained. This can be seen more clearly from FIG. 10.

FIG. 10 shows the method of controlling inertia in accordance with the embodiment of FIG. 9 in a control loop form. In FIG. 10, the top and bottom loops show the characteristics of the aforementioned embodiments and diagrammatically show a new embodiment in which the two embodiments are combined.

In the embodiment of FIGS. 9 and 10, when a disturbance occurs in an electrical grid, an individual droop coefficient is calculated by taking the rotor speed of a wind turbine within a wind farm into consideration, and the maximum value of the ROCOF is maintained so that the wind turbine maintains the highest active power reference value. Accordingly, the frequency of the electrical grid can be effectively recovered.

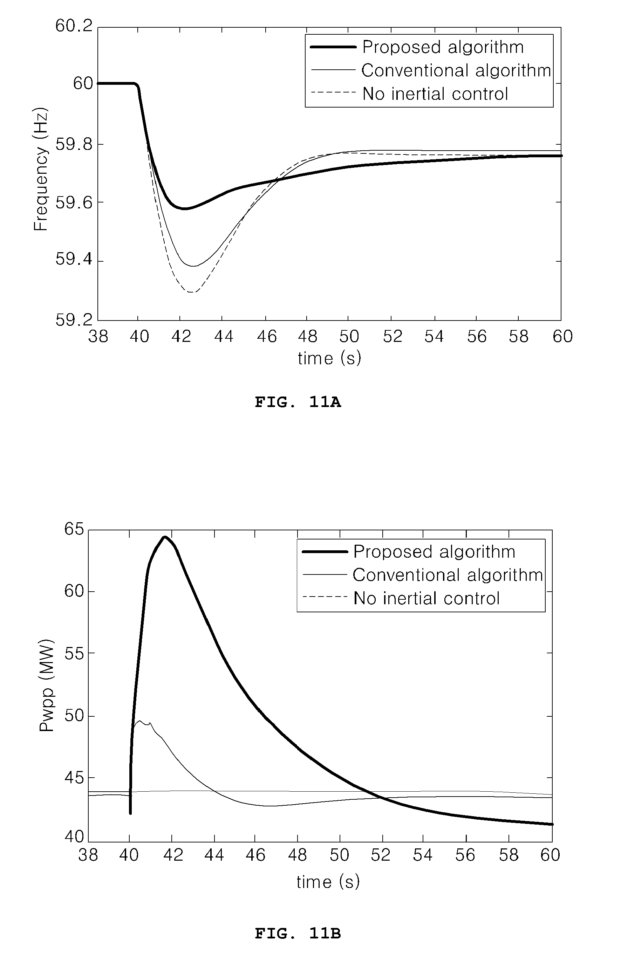

The simulation results of the present embodiment are shown in FIGS. 11A to 11D.

In FIGS. 11A and 11B, a bold solid line shows a characteristic in accordance with the present embodiment, a thin solid line shows a characteristic in the case where an ROCOF varying over time was applied without deriving the maximum value of the ROCOF in FIG. 9 and an individual droop coefficient was not calculated, and a dotted line shows a characteristic in the case where only MPPT control was performed, but additional frequency control was not performed.

FIG. 11A shows a change of the frequency over time, and FIG. 11B shows the output power of the wind farm over time. It can be seen that the frequency nadir has more risen (refer to FIG. 11A) in the embodiment of the present invention than in the comparison group because more active power is supplied (refer to FIG. 11B) to the load immediately after the frequency is decreased. It can also be seen that the reference value of the active power (output) of the wind turbine is largest when a disturbance occurs in the electrical grid and the rotor speed is reduced because the kinetic energy of the wind turbine is released in order to supply more active power. That is, the wind turbine supplies more active power to the electrical grid immediately after the frequency is decreased in order to contribute to the recovery of the frequency. It can also be seen that the recovery of the frequency is best because more active power is supplied to the grid as compared with the embodiments of FIGS. 5A and 8A.

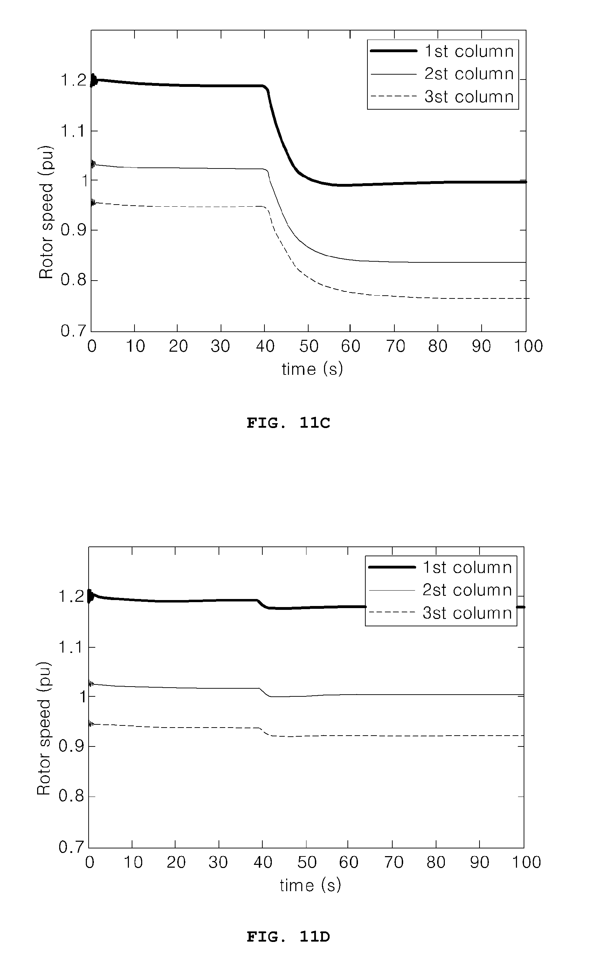

FIG. 11C shows the rotor speed over time in accordance with the embodiment of the present invention, and FIG. 11D shows a characteristic in the case where an ROCOF varying over time was applied without deriving the maximum value of the ROCOF in FIG. 9 and an individual droop coefficient was not calculated.

A bold solid line shows the rotor speed in a wind turbine disposed in a first column which is close to the system of FIG. 3, a solid line shows the rotor speed in a wind turbine disposed in a second column, and a dotted line shows the rotor speed in a wind turbine disposed in a third column. The reason why the rotor speed is different depending on the disposition of the wind turbine is that the wake effect is considered.

From FIGS. 11C and 11D, it can be seen that a decrement of the rotor speed in the embodiment of the present invention is increased as compared with the comparison group. In particular, it can be seen that a decrement of the rotor speed in the first column in which the kinetic energy is the greatest (i.e., the rotor speed is fastest) is the largest.

It can also be seen that the rotor speed is significantly decreased as compared with other embodiments (FIGS. 5C and 8C) of the present invention.

As a result, in accordance with the present invention, the simulations show that the frequency of the system can be controlled so that the frequency is less decreased, that is, the wind turbine can be controlled so that it does not fall off, and the frequency can return to a normal value within a short time by controlling inertia.

In accordance with the embodiments of the present invention, when a disturbance occurs, a frequency can be rapidly recovered since more active power can be supplied to an electrical grid as compared with the conventional method.

The embodiments of the present invention have been disclosed for illustrative purposes, and portions that may be modified, changed, and added by those skilled in the art to which the present invention pertains within the technical spirit of the present invention should be construed as belong to the claims.

**Claims**

1. A method of controlling inertia in a wind farm, comprising:

   obtaining information about the frequency of an electrical grid received from the electrical grid or calculated using the voltage of a wind turbine;
   receiving information about the rotor speed of the wind turbine;
   calculating the kinetic energy of the wind turbine using the information about the rotor speed;
   calculating an individual droop coefficient of the wind turbine using the calculated kinetic energy; and
   controlling the wind turbine using the calculated droop coefficient.

2. The method of claim 1, wherein calculating the droop coefficient comprises deriving the droop coefficient that is determined to have a positive correlation between the kinetic energy of the wind turbine and energy output from the wind turbine.

3. The method of claim 2, wherein a lowest limit of the droop coefficient is determined within a range in which the wind turbine should not be decreased below the minimum operating rotor speed.

4. A method of controlling inertia in a wind farm, comprising:

   obtaining information about the frequency of an electrical grid received from the electrical grid or calculated using the voltage of a wind turbine;
   calculating a rate of change of the frequency;
   deriving the maximum value of the rate of change of the frequency; and
   controlling the wind turbine in a state in which the maximum value of the ROCOF remains intact.

5. The method of claim 4, wherein controlling the wind turbine comprises controlling the wind turbine so that a reference value generated using the maximum value of the rate of change of the frequency is maintained when generating the active power reference value of the wind turbine.

6. The method of claim 4, wherein controlling the wind turbine comprises controlling the wind turbine by considering a coefficient of the rate of change of the frequency loop of the electrical grid that varies depending on the kinetic energy of the wind turbine.

7. The method of claim 6, wherein a lowest limit of the coefficient of the rate of change of the frequency loop is determined within a range in which the wind turbine should not be decreased below the minimum operating rotor speed.

8. The method of claim 4, further comprising:

   after obtaining the information about the frequency,
   receiving information about the rotor speed of the wind turbine;
   calculating the kinetic energy of the wind turbine using the information about the rotor speed; and
   calculating an individual droop coefficient of the wind turbine using the calculated kinetic energy,
   wherein controlling the wind turbine comprises controlling the wind turbine using the calculated droop coefficient in a state in which the maximum value of the rate of change of the frequency is maintained.

9. The method of claim 8, wherein calculating the droop coefficient comprises deriving the droop coefficient that is determined to have a positive correlation between the kinetic energy of the wind turbine and energy output from the wind turbine.

10. The method of claim 8, wherein controlling the wind turbine comprises controlling the wind turbine by using the calculated droop coefficient and considering a coefficient of the rate of change of the frequency loop that varies depending on the kinetic energy of the wind turbine.

11. The method of claim 8, wherein a lowest limit of the droop coefficient or the coefficient of the rate of change of the frequency loop is determined within a range in which the wind turbine should not be decreased below the minimum operating rotor speed.

12. A method of controlling inertia in a wind farm, comprising:

   obtaining information about the frequency of an electrical grid received from the electrical grid or calculated using the voltage of a wind turbine;
   calculating a rate of change of the frequency; and
   controlling the wind turbine in response to the rate of change of the frequency, wherein the method further comprises:

after obtaining the information about the frequency, receiving information about the rotor speed of the wind turbine; calculating the kinetic energy of the wind turbine using the information about the rotor speed; and calculating an individual droop coefficient of the wind turbine using the calculated kinetic energy.

**13.** The method of claim 12, wherein controlling the wind turbine comprises controlling the wind turbine by using the calculated droop coefficient and considering a coefficient of the rate of change of the frequency loop that varies depending on the kinetic energy of the wind turbine.

**14.** The method of claim 13, wherein a lowest limit of the droop coefficient or the coefficient of the rate of change of the frequency loop is determined within a range in which the wind turbine should not be decreased below the minimum operating rotor speed.

EP 2 818 693 A1

```
┌─────────────────┐
│ Obtain frequency │
│   information    │
└─────────────────┘
         │
         ▼
┌─────────────────┐
│ Receive or calculate │
│ information of rotor speed │
└─────────────────┘
         │
         ▼
┌─────────────────┐
│ Calculate kinetic energy │
└─────────────────┘
         │
         ▼
┌─────────────────┐
│ Calculate individual droop │
│      coefficient     │
└─────────────────┘
         │
         ▼
┌─────────────────┐
│ Control wind power │
│    generator     │
└─────────────────┘
```

FIG. 1

FIG. 2

9

FIG. 3

FIG. 4

FIG. 5A

FIG. 5B

**FIG. 5C**

**FIG. 5D**

```
┌─────────────────────┐
│  Obtain frequency   │
│    information      │
└─────────────────────┘
           │
           ▼
┌─────────────────────┐
│   Calculate ROCOF   │
└─────────────────────┘
           │
           ▼
┌─────────────────────┐
│ Derive maximum value of │
│        ROCOF        │
└─────────────────────┘
           │
           ▼
┌─────────────────────┐
│  Control wind power │
│      generator      │
└─────────────────────┘
```

FIG. 6

FIG. 7

FIG. 8A

FIG. 8B

FIG. 8C

FIG. 8D

FIG. 9

FIG. 10

**FIG. 11A**

**FIG. 11B**

FIG. 11C

FIG. 11D

## EUROPEAN SEARCH REPORT

Europäisches
Patentamt
European
Patent Office
Office européen
des brevets

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MEGHDAD FAZELI ET AL: "Novel Integration of Wind Generator-Energy Storage Systems Within Microgrids", IEEE TRANSACTIONS ON SMART GRID, IEEE, USA, vol. 3, no. 2, 1 June 2012 (2012-06-01), pages 728-737, XP011445347, ISSN: 1949-3053, DOI: 10.1109/TSG.2012.2185073 | 1-3 | INV. F03D7/02 F03D7/04 H02J3/38 |
| Y | * section IV. * | 6-14 | |
| X | EL ITANI S ET AL: "Short-term frequency support utilizing inertial response of DFIG wind turbines", POWER AND ENERGY SOCIETY GENERAL MEETING, 2011 IEEE, IEEE, 24 July 2011 (2011-07-24), pages 1-8, XP032171587, DOI: 10.1109/PES.2011.6038914 ISBN: 978-1-4577-1000-1 | 4,5 | |
| Y | * the whole document * | 6-11 | **TECHNICAL FIELDS SEARCHED (IPC)** |
| X | K. V. VIDYANANDAN ET AL: "Primary frequency regulation by deloaded wind turbines using variable droop", IEEE TRANSACTIONS ON POWER SYSTEMS, vol. 28, no. 2, 1 May 2013 (2013-05-01), pages 837-846, XP055098239, ISSN: 0885-8950, DOI: 10.1109/TPWRS.2012.2208233 * the whole document * | 1-3, 12-14 | F03D H02J |

-/--

The present search report has been drawn up for all claims

| Place of search | Date of completion of the search | Examiner |
|---|---|---|
| The Hague | 12 May 2014 | Libeaut, Laurent |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EUROPEAN SEARCH REPORT

Application Number

EP 13 19 0989

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MEGHDAD FAZELI ET AL: "Novel Integration of DFIG-Based Wind Generators Within Microgrids", IEEE TRANSACTIONS ON ENERGY CONVERSION, IEEE SERVICE CENTER, PISCATAWAY, NJ, US, vol. 26, no. 3, 1 September 2011 (2011-09-01), pages 840-850, XP011381066, ISSN: 0885-8969, DOI: 10.1109/TEC.2011.2146253 * the whole document * ----- | 1-3 | |
| Y | VIDYANANDAN K V ET AL: "Issues in the grid frequency regulation with increased penetration of wind energy systems", ENGINEERING AND SYSTEMS (SCES), 2012 STUDENTS CONFERENCE ON, IEEE, 16 March 2012 (2012-03-16), pages 1-6, XP032180634, DOI: 10.1109/SCES.2012.6199054 ISBN: 978-1-4673-0456-6 * Section IV, Fig. 11 * ----- | 12-14 | |
| A | US 2011/153099 A1 (GARCIA JORGE MARTINEZ [DK]) 23 June 2011 (2011-06-23) * the whole document * ----- | 4 | |
| A | US 2011/109086 A1 (STIESDAL HENRIK [DK]) 12 May 2011 (2011-05-12) * the whole document * ----- | 4 | |

TECHNICAL FIELDS SEARCHED (IPC)

The present search report has been drawn up for all claims

| Place of search | Date of completion of the search | Examiner |
|---|---|---|
| The Hague | 12 May 2014 | Libeaut, Laurent |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

Application Number

EP 13 19 0989

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

21

Europäisches Patentamt
European Patent Office
Office européen des brevets

**LACK OF UNITY OF INVENTION**
**SHEET B**

Application Number

EP 13 19 0989

The Search Division considers that the present European patent application does not comply with the requirements of unity of invention and relates to several inventions or groups of inventions, namely:

1. claims: 1-3, 12-14

   A method of controlling inertia in a wind farm comprising determining the frequency of an electrical grid, calculating a kinetic energy of a wind turbine using information about the rotor speed, setting an individual droop coefficient based on the kinetic energy and controlling the wind turbine according to the calculated droop coefficient. Additionally the wind turbine is also controlled according to a rate of change of the frequency (claim 12).

   ---

2. claims: 4-11

   A method of controlling inertia in a wind farm comprising determining the frequency of an electrical grid, calculating a rate of change of the frequency, deriving a maximum rate of change and controlling the wind turbine in a state in which the rate maximum value of the rate of change remains intact.

   ---

**ANNEX TO THE EUROPEAN SEARCH REPORT
ON EUROPEAN PATENT APPLICATION NO.**                    EP 13 19 0989

This annex lists the patent family members relating to the patent documents cited in the above-mentioned European search report.
The members are as contained in the European Patent Office EDP file on
The European Patent Office is in no way liable for these particulars which are merely given for the purpose of information.

12-05-2014

| Patent document cited in search report | | Publication date | Patent family member(s) | | Publication date |
|---|---|---|---|---|---|
| US 2011153099 | A1 | 23-06-2011 | AU | 2009265843 A1 | 07-01-2010 |
| | | | CN | 102067407 A | 18-05-2011 |
| | | | EP | 2311164 A1 | 20-04-2011 |
| | | | US | 2011153099 A1 | 23-06-2011 |
| | | | WO | 2010000663 A1 | 07-01-2010 |
| US 2011109086 | A1 | 12-05-2011 | EP | 1914419 A1 | 23-04-2008 |
| | | | US | 2008093857 A1 | 24-04-2008 |
| | | | US | 2011109086 A1 | 12-05-2011 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020130072685

- KR 20080077161